# EUROPÄISCHE PATENTSCHRIFT

(11) **EP 2 011 817 B1**
(45) Veröffentlichungstag und Bekanntmachung des Hinweises auf die Patenterteilung: **18.11.2009**
(21) Anmeldenummer: 07111732.9
(22) Anmeldetag: 04.07.2007
(51) Int. Cl.: C08J 7/00

(54) **Formkörper mit einer superhydrophoben Oberfläche von hoher Druck- und Scherfestigkeit**
Moulded part with a super hydrophobic surface with high compressive and shearing resistance
Pièce moulèe dotée d'une surface très hydrophile prèsentant une résistance plus importante à la pression et au cisaillement

(43) Veröffentlichungstag der Anmeldung: 07.01.2009
(73) Patentinhaber: Evonik Degussa GmbH, 45128 Essen (DE)
(72) Erfinder: Michel, Werner, 64750, Lützelbach (DE)

(56) Entgegenhaltungen:
- WO-A-89/00592
- US-A- 2 909 443

## Beschreibung

Die Erfindung betrifft ein Verfahren zur Herstellung eines Formkörpers mit einer superhydrophoben Oberfläche von hoher Druck- und Scherfestigkeit und den Formkörper selbst.

Gemäß dem Stand der Technik können Kunststoffe durch Beschichtung mit hydrophoben Partikeln in ihrem Benetzungsverhalten gegenüber Wasser und anderen hoch polaren Flüssigkeiten derart modifiziert werden, dass an aufgesetzten Wassertropfen Randwinkel von mehr als 120 Grad bis hin zum theoretisch möglichen Maximum von 180 Grad auftreten können. Derartige Oberflächen werden als "superhydrophob" bezeichnet, und in denjenigen Fällen, wo Werte von 140 Grad oder darüber erhalten werden, kann nach einer Definition der Deutsche Bundesstiftung Umwelt (Bonn, 24.10.2000 )auch die Bezeichnung "Lotus-Effekt^{®}-Oberfläche" verwendet werden.

Die hervorragende Superhydrophobie einer natürlichen Lotusblatt-Oberfläche wird mit einer großen Empfindlichkeit gegenüber drückenden und scherenden (reibenden) Kräften erkauft.

Die Ursache ist darin zu sehen, dass die die Oberfläche bedeckenden Mikrometer großen erhabenen Strukturen aus Wachskristallen bestehen, die nur lose auf einander liegen und zudem keine hohe Eigenfestigkeit aufweisen.

Eine deutliche Verbesserung der Druck- und Scherfestigkeit wird bei technisch hergestellten superhydrophoben Oberflächen dadurch erreicht, dass anstelle der auf natürlichem Wege entstandenen Wachskristalle synthetisch hergestellte Partikel in einen Matrixwerkstoff eingebettet werden, derart, dass die Partikel teilweise aus der Matrix herausragen.

Trotz dieser Maßnahmen ist die Scherfestigkeit auch solcher Oberflächen für viele Anwendungen nicht ausreichend, insbesondere in solchen Anwendungen, bei denen die superhydrophoben Oberflächen unvorhersehbar oder bestimmungsgemäß irgendwelchen Wisch- oder Reibbelastungen ausgesetzt sind.

Aufgabe der Erfindung war es daher Formkörper bereitzustellen, die gegenüber dem Stand der Technik eine verbesserte Druck- und Scherfestigkeit aufweisen. Aufgabe der Erfindung war es weiterhin ein Verfahren zur Herstellung dieser Formkörper bereitzustellen.

Es wurde nun gefunden, dass die Superhydrophobie der Oberfläche eines Formkörpers dann eine gesteigerte Beständigkeit gegen Druck- und Scherkräfte aufweist, nachdem der Formkörper mit energiereicher Strahlung bestrahlt wurde.

Gegenstand der Erfindung ist daher ein Verfahren zur Herstellung eines Formkörpers, der eine Unterlage aus einem polymeren Material und auf der Unterlage vorliegende, und mit dieser fest verbundene Partikel, die eine superhydrophobe, Erhebungen und Vertiefungen aufweisende Schicht bilden, umfasst, bei dem man die auf das polymere Material aufgebrachten hydrophoben, nanoskaligen Partikel und das Trägermaterial über einen Zeitraum von 0,1 Sekunden bis 5 Stunden mit Beta- und/oder Gammastrahlung beaufschlagt, derart, dass eine Strahlungsdosis von 10 bis 1000 kGy, vorzugsweise 25 bis 500 kGy, aufgenommen wird.

Es ist: 1 Gy = 1 KJ/kg

Bei Bestrahlung mit Betastrahlung wird das Verfahren vorzugsweise so ausgeführt, dass man zunächst über kurze Zeiträume, beispielsweise 0,1 bis 10 s, bestrahlt, den Gegenstand anschließend abkühlen lässt und erneut bestrahlt. Die Abkühlzeiten richten sich nach dem Material der Unterlage, der Partikel und der Art der Strahlungsquelle. Bei Einsatz von Gamma-Strahlung können längere Bestrahlungszeiten ohne Unterbrechung durchgeführt werden.

Das polymere Material der Unterlage wird vorzugsweise aus der Gruppe bestehend aus Thermoplasten, Duroplasten und Elastomeren ausgewählt.

Als polymeres Material kann besonders bevorzugt wenigstens eines ausgewählt aus der Gruppe bestehend aus Polycarbonaten, Polyoxymethylenen, Poly(meth)acrylaten, Polyamiden, Polyvinylchlorid, Polyethylenen, Polypropylenen, aliphatischen linearen- oder verzweigten Polyalkenen, cyclischen Polyalkenen, Polystyrolen, Polyestern, Polyethersulfonen, Polyacrylnitril oder Polyalkylenterephthalaten, Poly(vinylidenfluorid), Poly(hexafluorpropylen), Poly(perfluorpropylenoxid), Poly(fluoralkylacrylat), Poly(fluoralkylmethacrylat), Poly(vinylperfluoralkylether) oder andere Polymere aus Perfluoralkoxyverbindungen, Poly(isobuten), Poly(4-methyl-1-penten) und Polynorbornen als Homo- oder Copolymer eingesetzt werden. Ganz besonders bevorzugt können Poly(ethylen), Poly(propylen), Polymethylmethacrylate, Polystyrole, Polyester, Polyvinylchlorid, AcrylnitrilButadien-Styrol Terpolymere (ABS), Polyethylenterephthalat, Polybutylenterephthalat oder Poly(vinylidenfluorid), ein Gummi, ein Kunstkautschuk oder ein Naturkautschuk aufweisendes Material eingesetzt werden.

Die gemäß des erfindungsgemäßen Verfahrens eingesetzten Partikel sind hydrophob und nanoskalig.

Unter nanoskalig sind Partikel mit einem mittleren Durchmesser von 2 bis 100 nm zu verstehen. Bei aggregierten Partikeln bezieht sich diese Angabe auf die im Aggregat vorliegenden Primärpartikel.

Unter hydrophoben Partikeln sind solche zu verstehen, deren hydrophobe Eigenschaften auf die Materialeigenschaften der an den Oberflächen der Partikel vorhandenen Materialien selbst zurückgehen können oder deren hydrophobe Eigenschaften durch eine Behandlung der Partikel mit einer geeigneten Verbindung erhalten werden kann. Die Partikel können vor oder nach dem Aufbringen bzw. Anbinden auf bzw. an die Oberfläche des Formkörpers mit hydrophoben Eigenschaften ausgestattet worden sein. Zur Hydrophobierung der Partikel vor oder nach dem Aufbringen auf die Oberfläche können diese mit einer zur Hydrophobierung geeigneten Verbindung, z. B. aus der Gruppe der Alkylsilane, der Fluoralkylsilane oder der Disilazane behandelt werden.

Als hydrophobe, nanoskalige Partikel können beispielsweise Silikate, Mineralien, Metalloxide, Metallpulver, Pigmente und/oder Polymere eingesetzt werden.

Bevorzugt können hydrophobe, nanoskalige Metalloxidpartikel eingesetzt werden. Besonders bevorzugt können Metalloxidpartikel ausgewählt aus der Gruppe bestehend aus Aluminiumoxid, Ceroxid, Eisenoxid, Siliciumdioxid, Titandioxid, Zinkoxid, Zirkondioxid und Mischoxide der vorgenannten Oxide eingesetzt werden. Mischoxide können bevorzugt binäre Mischoxide sein, wie beispielsweise Silicium-Titan-Mischoxide oder Silicium-Aluminium-Mischoxide.

Ganz besonders bevorzugt können pyrogen hergestellte Metalloxidpartikel eingesetzt werden. Diese können eine BET-Oberfläche von 20 bis 400 m²/g und insbesondere von 35 bis 300 m²/g aufweisen. Pyrogen hergestellte Metalloxidpartikel im Sinne der Erfindung umfassen Aluminiumoxid, Ceroxid, Eisenoxid, Siliciumdioxid, Titandioxid, Zinkoxid, Zirkondioxid und Mischoxide der vorgenannten Oxide.

Unter pyrogen sind durch Flammenoxidation und/oder Flammenhydrolyse erhaltene Metalloxidpartikel zu verstehen.

Dabei werden oxidierbare und/oder hydrolysierbare Ausgangstoffe in der Regel in einer Wasserstoff-Sauerstoffflamme oxidiert beziehungsweise hydrolysiert. Als Ausgangsstoffe für pyrogene Verfahren können organische und anorganische Stoffe eingesetzt werden. Besonders geeignet sind beispielsweise die gut verfügbaren Chloride, wie Siliciumtetrachlorid, Aluminiumchlorid oder Titantetrachlorid. Geeignete organische Ausgangsverbindungen können beispielsweise Alkoholate, wie Si (OC₂H₅) ₄, Al (O*i*C₃H₇)₃ oder Ti(O*i*Pr)₄ sein. Die so erhaltenen Metalloxidpartikel sind weitestgehend porenfrei und weisen auf der Oberfläche freie Hydroxylgruppen auf. In der Regel liegen die pyrogenen Metalloxidpartikel wenigstens teilweise in Form aggregierter Primärpartikel vor. In der vorliegenden Erfindung werden Metalloidoxide, wie beispielsweise Siliciumdioxid, als Metalloxid bezeichnet.

Die Hydrophobierung der Partikel kann durch Reaktion mit Oberflächenmodifizierungsreagentien erfolgen, die mit aktiven Gruppen an der Partikeloberfläche reagieren.

Bevorzugt können hierzu die folgenden Silane, einzeln oder als Mischung, eingesetzt werden:
Organosilane (RO)₃Si(CₙH₂ₙ₊₁) und (RO)₃ Si(CₙH₂ₙ₋₁)
   mit R = Alkyl, wie Methyl, Ethyl, n-Propyl, i-Propyl, Butyl und n=1-20.
Organosilane R'ₓ(RO)_{y}Si(CₙH₂ₙ₊₁) und R'ₓ(RO)_{y}Si(CₙH₂ₙ₋₁)
   mit R=Alkyl, wie Methyl, Ethyl, n-Propyl, i-Propyl, Butyl; R'=Alkyl, wie Methyl, Ethyl, n-Propyl, i-Propyl, Butyl; R'=Cycloalkyl; n=1-20; x+y=3, x=1, 2; y=1, 2.
Halogenorganosilane X₃Si (CₙH₂ₙ₊₁) und X₃Si (CₙH₂ₙ₋₁)
   mit X=Cl, Br; n=1-20.
Halogenorganosilane X₂ (R') Si (CₙH₂ₙ₊₁) und X₂ (R') Si (CₙH₂ₙ₋₁)
   mit X=Cl, Br, R' = Alkyl, wie Methyl, Ethyl, n-Propyl, i-Propyl, Butyl-; R'=Cycloalkyl; n=1-20
Halogenorganosilane X (R') ₂Si (CₙH₂ₙ₊₁) und X (R')₂Si (CₙH₂ₙ₋₁)
   mit X=Cl, Br; R' = Alkyl, wie Methyl-, Ethyl-, n-Propyl-, i-Propyl-, Butyl-; R'=Cycloalkyl; n=1-20
Organosilane (RO)₃Si(CH₂)ₘ-R'
   mit R=Alkyl, wie Methyl-, Ethyl-, Propyl-; m=0,1-20; R'= Methyl, Aryl wie -C₆H₅, substituierte Phenylreste, C₄F₉, OCF₂-CHF-CF₃, C₆F₁₃, OCF₂CHF₂, Sₓ- (CH₂) ₃Si(OR)₃;
Organosilane (R")ₓ(RO)_{y}Si(CH₂)ₘ-R'
   mit R"=Alkyl, x+y=3; Cycloalkyl, x=1,2, y=1,2; m=0,1 bis 20; R'=Methyl, Aryl, wie C₆H₅, substituierte Phenylreste, C₄F₉, OCF₂-CHF-CF₃, C₆F₁₃, OCF₂CHF₂, Sₓ-(CH₂)₃Si(OR)₃, SH, NR'R"R"' mit R'=Alkyl, Aryl; R"=H, Alkyl, Aryl; R"'=H, Alkyl, Aryl, Benzyl, C₂H₄NR"" R''''' mit R""=H, Alkyl und R""'= H, Alkyl.
Halogenorganosilane X₃Si(CH₂)ₘ-R'
   X=Cl, Br; m=0,1-20; R' = Methyl, Aryl wie C₆H₅, substituierte Phenylreste, C₄F₉, OCF₂-CHF-CF₃, C₆F₁₃, O-CF₂-CHF₂, Sₓ-(CH₂)₃Si(OR)₃, wobei R = Methyl, Ethyl, Propyl, Butyl und x=1 oder 2, SH.
Halogenorganosilane RX₂Si(CH₂)ₘR'
   X=Cl, Br; m=0,1-20; R' = Methyl, Aryl wie C₆H₅, substituierte Phenylreste, C₄F₉, OCF₂-CHF-CF₃, C₆F₁₃, O-CF₂-CHF₂, -OOC(CH₃)C=CH₂, -Sₓ-(CH₂)₃Si(OR)₃, wobei R = Methyl, Ethyl, Propyl, Butyl und x=1 oder 2, SH.
Halogenorganosilane R₂XSiCH₂)ₘR'
   X=Cl, Br; m=0,1-20; R' = Methyl, Aryl wie C₆H₅, substituierte Phenylreste, C₄F₉, OCF₂-CHF-CF₃, C₆F₁₃, O-CF₂-CHF₂, -Sₓ-(CH₂)₃Si(OR)₃, wobei R = Methyl, Ethyl, Propyl, Butyl und x=1 oder 2, SH.
Silazane R'R₂SiNHSiR₂R' mit R,R'= Alkyl, Vinyl, Aryl.

Cyclische Polysiloxane D3, D4, D5 und ihre Homologen, wobei unter D3, D4 und D5 cyclische Polysiloxane mit 3, 4 oder 5 Einheiten des Typs -O-Si(CH₃)₂ verstanden wird, z.B. Octamethylcyclotetrasiloxan = D4.

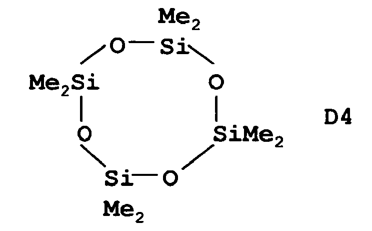

Polysiloxane bzw. Silikonöle des Typs 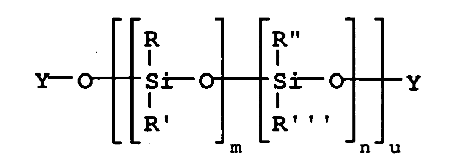 mit
R = Alkyl,
R' = Alkyl, Aryl,H
R" = Alkyl, Aryl
R"' = Alkyl, ArylH
Y = CH₃, H, C_{z}H_{2z+1} mit z=1-20,
   Si (CH₃)₃, Si(CH₃)₂H, Si (CH₃)₂OH, Si (CH₃)₂ (OCH₃), Si (CH₃) ₂ (C_{z}H_{2z+1})
wobei
R' oder R'' oder R''' (CH₂)_{z}-NH₂ und
z = 1 - 20, m = 0, 1, 2, 3, ...∞, n = 0,1,2,3,...∞, u = 0,1,2,3,...∞ ist.

Bevorzugt können als Oberflächenmodifizierungsmittel folgende Stoffe eingesetzt werden: Octyltrimethoxysilan, Octyltriethoxysilan, Hexamethyldisilazan, 3-Methacryloxypropyltrimethoxysilan, 3-Methacryloxypropyltriethoxysilan, Hexadecyltrimethoxysilan, Hexadecyltriethoxysilan, Dimethylpolysiloxan, Nonafluorohexyl-trimethoxysilan, Tridecaflourooctyltrimethoxysilan, Tridecaflourooctyltriethoxysilan.

Besonders bevorzugt können Hexamethyldisilazan Octyltriethoxysilan und Dimethylpolysiloxane eingesetzt werden.

Geeignete hydrophobe, pyrogene Metalloxide können beispielsweise aus der Tabelle genannten AEROSIL^{®}- und AEROXIDE^{®}-Typen (alle Degussa) ausgewählt werden.

**Tabelle: Hydrophobe Metalloxide**

| **Typ** | **BET-Oberfläche [m²/g]** | **Trocknungsverlust [Gew.-%]** | **pH** | **Kohlenstoffgehalt [Gew.-%]** |
|---|---|---|---|---|
| AEROSIL^{®} | | | | |
| R 972 | 110 ± 20 | ≤ 0,5 | 3, 6 - 4,4 | 0, 6 - 1,2 |
| R 974 | 170 ± 20 | ≤ 0,5 | 3,7 - 4,7 | 0,7 - 1,3 |
| R 104 | 150 ± 25 | - | ≥ 4, 0 | 1,0 - 2,0 |
| R 106 | 250 ± 30 | - | ≥ 3,7 | 1,5 - 3,0 |
| R 202 | 100 ± 20 | ≤ 0,5 | 4, 0 - 6, 0 | 3,5 - 5, 0 |
| R 805 | 150 ± 25 | ≤ 0,5 | 3,5 - 5,5 | 4,5 - 6,5 |
| R 812 | 260 ± 30 | ≤ 0,5 | 5,5 - 7,5 | 2,0 - 3,0 |
| R 816 | 190 ± 20 | ≤ 1,0 | 4, 0 - 5,5 | 0, 9 - 1,8 |
| R 7200 | 150 ± 25 | ≤ 1,5 | 4,0 - 6,0 | 4,5 - 6,5 |
| R 8200 | 160 ± 25 | ≤ 0,5 | ≥ 5,0 | 2,0 - 4,0 |
| R 9200 | 170 ± 20 | ≤ 1,5 | 3,0 - 5,0 | 0,7 - 1,3 |
| AEROXIDE^{®} | | | | |
| LE 1 | 160 ± 30 | ≤ 0,5 | ≥ 5,0 | 2,0-4,0 |
| LE 2 | 220 ± 30 | ≤ 1,0 | ≥ 5,0 | 2,5-4,5 |
| LE 3 | 100 ± 20 | ≤ 0,5 | 4-6 | 3,5-5,0 |
| TiO₂ T805 | 45 ± 10 | - | 3,0 - 4,0 | 2,7 - 3,7 |
| TiO₂ NKT90 | 50 - 75 | - | 3,0 - 4,0 | 2,0 - 4,0 |
| Alu C 805 | 100 ± 15 | - | 3,0 - 5,0 | - |

Die nanoskaligen, hydrophoben Partikel können als Pulver oder in Form einer Dispersion auf die Unterlage aufgebracht werden.

Vorzugsweise ist die flüssige Phase der Dispersion leicht flüchtig. Als Lösemittel können insbesondere Alkohole, wie Ethanol oder Iso-Propanol, Ketone, wie Aceton oder Methylethylketon, Ether, wie Diisopropylether, oder auch Kohlenwasserstoffe wie Cyclohexan dienen. Besonders bevorzugt sind Alkohole. Es kann vorteilhaft sein, wenn die Dispersion 0,1 bis 10, bevorzugt von 0,25 bis 7,5 und ganz besonders bevorzugt von 0,5 bis 5 Gew.-% Partikel bezogen auf das Gesamtgewicht der Dispersion enthält. Durch geeignete Wahl der Dispergiervorrichtung können definierte Partikelgrößen erzeugt werden. Geeignete Dispergieraggregate können beispielsweise Rotor-Stator-Maschinen, Hochenergiemühlen, bei denen die Partikel durch Kollision miteinander vermahlen werden, Planetenkneter, Rührwerkskugelmühlen, als Rüttelaggregat arbeitende Kugelmühlen, Rüttelplatten, Ultraschallaggregate oder Kombinationen der vorgenannten Aggregate sein.

Die Dispersion wird danach auf das polymere Material aufgebracht und das Lösungsmittel anschließend entfernt. Das Aufbringen der Dispersion kann mittels Rotationsbeschichtung (Spin-Coating), Tauchbeschichtung, Streichen, Sprühen oder Rakeln erfolgen.

Eine besondere Art des Aufbringens stellt das Spritzgießen dar, bei dem man zunächst die Partikel, vorzugsweise in Form einer Dispersion, in eine Spritzgussform einbringt, das Lösungsmittel verdampfen lässt und anschließend einen Spritzgussvorgang mit einem thermoplastischen Polymeren durchführt, wobei die Partikel in die Oberfläche des polymeren Materiales nur zu einem Teil ihres Durchmessers eingedrückt werden.

Eine weitere Art des Aufbringens, welche sich insbesondere zur Herstellung flächiger Erzeugnisse eignet, ist das Kalandrierverfahren. Hierbei werden die feinteiligen hydrophoben Partikel mittels zweier gegenläufiger Walzen teilweise in die Oberfläche eines durch Wärmezufuhr plastischen Polymerwerkstoffes gedrückt, so dass einerseits eine mechanische Verklammerung mit dem Polymer entsteht, andererseits die Partikel noch zu einem Teil ihres Durchmessers aus der Polymerschicht herausragen. Nach dem Abkühlen ist die mit Partikeln beschichtete Oberfläche des betreffenden Werkstoffes superhydrophob.

Bei beiden der geschilderten Verfahren entsteht auf der Unterlage eine Schicht aus hydrophoben Teilchen in solcher Dicke, dass die Unterlage vollkommen bedeckt ist.

Ein weiterer Gegenstand der Erfindung ist ein Formkörper, der gemäß des erfindungsgemäßen Verfahrens erhältlich ist.

Die Schichtdicke der superhydrophoben Oberfläche kann in weiten Grenzen variiert werden. Bevorzugt kann diese 0,05 bis 100 µm betragen, wobei sich mehrere Lagen von Partikeln übereinander befinden, die durch van der Waals - Kräfte beziehungsweise mechanische Verklammerung untereinander zusammenhalten.

Der Formkörper weist weiterhin auf seiner Oberfläche durch die unregelmäßige Gestalt der hydrophoben, nanoskaligen Partikel hervorgerufen, Erhebungen auf. Diese können vorzugsweise eine mittlere Höhe von 20 nm bis 25 µm und einen mittleren Abstand von 20 nm bis 25 µm aufweisen.

Die Höhe und Entfernung der Erhebungen kann aus TEM-Aufnahmen abgeschätzt werden. Aufgrund der Verteilung und der Superimposition der entstandenen Partikel-Agglomerate ist eine Maßangabe nur in ungefähren Grenzen möglich. Es lässt sich erkennen, dass die mittlere Höhe ungefähr gleich ist der mittleren Entfernung zwischen zwei korrespondierenden Agglomeraten und dass diese Maße überwiegend zwischen 20 Nanometern und 250 Nanometern betragen. Bei kalandrierten Platten oder pulverbeschichteten Flächen können die oben genannten Maße deutlich größer ausfallen und bis zu 25 Mikrometer betragen, wobei auf der Oberfläche dieser Grobstrukturen kleinere Feinstrukturen vorkommen.

Der Formkörper kann beispielsweise eine Folie, eine Platte, ein Rohr, ein Lampenschirm, ein Eimer, ein Fass, eine Schale, ein Messbecher, ein Trichter, eine Wanne oder ein Gehäuseteil sein.

### Beispiele

### Einsatzstoffe:

D-1: Dispersion von Trimethylsilyl-beschichtetem Siliciumdioxid (AEROXIDE®LE2), 1 Gew.-% in Ethanol;
P-1: HDPE, Hochmolekulares Polyethylen
P-2: Vestodur RS1777 Polybutylenterephtalat
P-3: Vestodur CL2030 Polybutylenterephtalat, gefüllt mit 30% Glasfasern
P-4: V-PTS Createc B3NM800/25 Polybutylenterephtalat
P-5: Polypropylen mit 2,5% Triallylisocyanurat
P-6: Polypropylen mit 3% Alterungsschutzmittel PTS A010PO

Strahlungsquelle: Als Strahlungsquelle können gewöhnliche Elektronenbeschleuniger eingesetzt werden. Die Beschleunigerspannung beträgt in der Regel 100 KeV bis 3 MeV. In den Beispielen wurde ein Elektronenbeschleuniger mit einer Gesamtleistung von 150 Kilowatt und einer Beschleunigerspannung von 2,8 MeV eingesetzt.

### Bestimmung der Haftung:

Trockenreibung: trockener Filz, Belastung: 1N/cm²
Nassreibung: Wasser benetzter Filz, Belastung 1N/cm²

Hubzahl: bezeichnet die Anzahl der Gleitvorgänge des belasteten Filzes auf der Oberfläche des Probekörpers

Randwinkelmessung: Mit Wasser nach der bekannten Methodik der Messung am ruhenden Tropfen(Colloid & Polymer Science, Volume 55, Number 2, 169-171).

Beispiel 1: Auf eine Spritzgussform wird mittels einer Sprühvorrichtung ein Aerosol aus D-1 in einer solchen Menge aufgebracht, dass die Oberfläche des Formnestes gleichmäßig befeuchtet ist. Es wird einige Sekunden gewartet, bis die Trägerflüssigkeit (Ethanol) verdampft ist. Mit der so vorbereiteten Spritzgussform werden bei einer Werkzeugoberflächen-Temperatur von 60°C und einem Druck von 55 bar mittels einer Standardspritzgussmaschine (Engel 150/50 S) Rechteckplättchen der Abmessung 50x30x2 mm mit Rauhigkeitsstufe 33 nach VDI aus HDPE spritzgegossen. Die Schmelzetemperatur beträgt 300°C und der Nachpressdruck liegt bei 50 bar.

Beispiel 2: wie Beispiel 1, jedoch wird der Spritzgusskörper über einen Zeitraum von 0,25 Sekunden mit einer Strahlungsintensität von 25 kGy bestrahlt.

Beispiele 3 bis 5: analog Beispiel 2, jedoch passieren die Probekörper den Strahlengang in mehreren zeitlich gestaffelten Durchläufen, unterbrochen von Abkühlphasen, bis zur Aufnahm der der gewünschten Dosis.

Einsatzstoffe und Versuchsbedingungen sind in der Tabelle 1 wiedergegeben.

Beispiele 6 bis 10: analog Beispiel 2, jedoch unter Variierung des Polymeres und der Strahlungsintensität. Der Index T bezieht sich auf die Auswertung mittels Trockenreibung, der Index N auf die Auswertung mittels Nassreibung.

Einsatzstoffe und Versuchsbedingungen sind in den Tabelle 2 und 3 wiedergegeben.

**Tabelle 1: Trockenreibung**

| **Bspl.** | **1*** | **2** | **3** | **4** | **5** |
|---|---|---|---|---|---|
| **Polymer** | P-1 | P-1 | P-1 | P-1 | P-1 |
| **kGy** | 0 | 25 | 50 | 75 | 100 |
| **Hubzahl** | **Randwinkel in °** | | | | |
| 0 | 157 | 158 | 159 | 158 | 157 |
| 1 | 146 | 157 | 153 | 149 | 153 |
| 2 | 117 | - | - | - | |
| 5 | - | 141 | 143 | 143 | 141 |

| | | | | | |
|---|---|---|---|---|---|
| • = Vergleich | | | | | |

**Tabelle 2: Trockenreibung**

| | | | | | |
|---|---|---|---|---|---|
| **Bspl.** | **6T** | **7T** | **8T** | **9T** | **10T** |
| **Polymer** | P-2 | P-3 | P-4 | P-5 | P-6 |
| **kGy** | 350 | 350 | 100 | 100 | 100 |
| Hubzahl | Randwinkel in ° | | | | |
| 0 | 155 | 154 | 159 | 157 | 158 |
| 1 | 146 | 144 | 147 | 157 | 151 |
| 2 | 136 | 141 | - | - | - |
| 5 | - | - | 144 | - | 153 |
| 10 | - | 135 | - | 156 | 147 |
| 40 | - | - | - | 137 | 139 |

**Tabelle 3: Nassreibung**

| | | | | | |
|---|---|---|---|---|---|
| **Bspl.** | **6N** | **7N** | **8N** | **9N** | **10N** |
| **Polymer** | P-2 | P-3 | P-4 | P-5 | P-6 |
| **kGy** | 350 | 350 | 100 | 100 | 100 |
| Hubzahl | Randwinkel in ° | | | | |
| 0 | 155 | 154 | 159 | 157 | 158 |
| 1 | 128 | - | - | - | - |
| 5 | - | - | 132 | - | - |
| 10 | - | 118 | - | - | - |
| 30 | - | - | - | 128 | 139 |

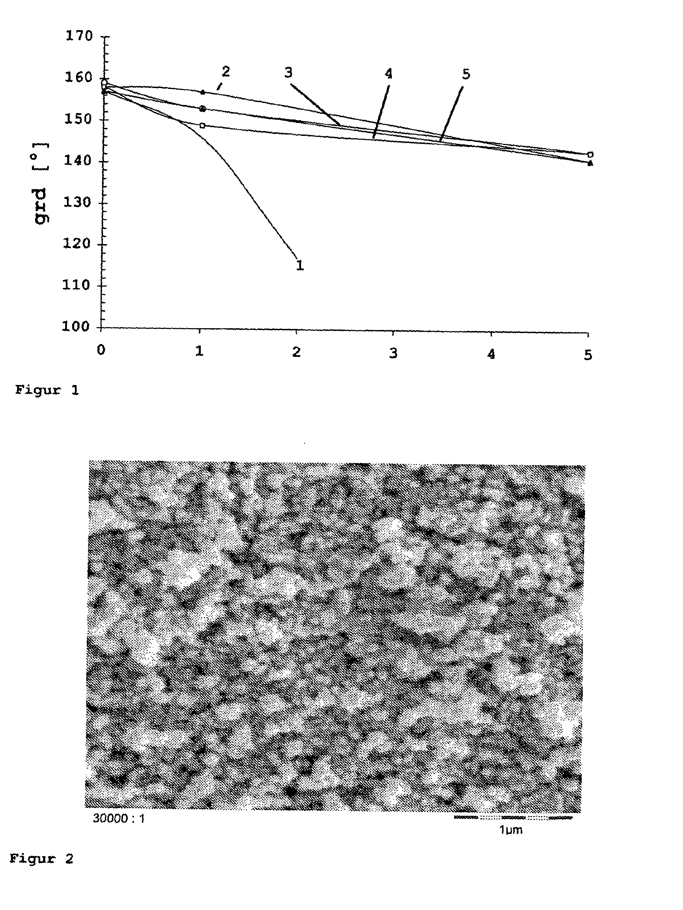

Figur 1 gibt die Werte aus Tabelle 1 wieder. Dabei ist der Randwinkel in [°] gegen die Hubzahl aufgetragen. Aus den gemessenen Werten für den Randwinkel geht klar hervor, dass die superhydrophoben Oberflächen aus den erfindungsgemäßen Beispielen 2-5 stabiler sind gegen scherende Kräfte als die Oberfläche, die ohne Bestrahlung erhalten wurde (Beispiel 1).

Dieser Befund ist überraschend, da zu erwarten war, dass die energiereiche Strahlung zu einem Verlust an Hydrophobie führen würde, wie dies beispielsweise bei anderen Versuchen unter dem Einfluss von UV-Strahlung beobachtet wurde.

Figur 2 zeigt eine TEM-Aufnahme (Transmissions-ElektronenMikroskopie) der Oberfläche des Spritzgussgkörpers aus Beispiel 2 . Die Oberfläche der HDPE-Platte weist eingedrückte Partikel von hydrophobiertem Siliciumdioxid auf, welche eine dicht gepackte, unregelmäßig strukturierte Schicht bilden. An der Oberfläche des Spritzgusskörpers wurde der Randwinkel für einen Wassertropfen bestimmt. Es ergab sich für einen 40 µl großen Wassertropfen ein Randwinkel von 157°.

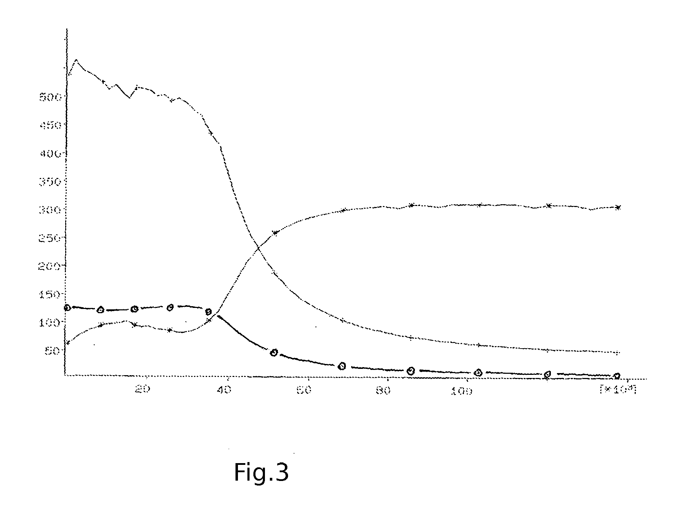

Figur 3 zeigt das Ergebnis einer XPS-Analyse (X-Ray photoelectron spectroscopy) des Spritzgußgkörpers aus Beispiel 2. Es ist: ○-○ = Si, +-+ = ○, x-x = C. Danach nimmt die Kohlenstoffkonzentration mit zunehmender Entfernung von der Probenoberfläche zu, die Sauerstoff-und Siliciumkonzentration ab (X-Achse: t in 10³·s; Y-Achse: Intensität in 10³·cps). Die Zeit t auf der x-Achse entspricht einer bestimmten Eindringtiefe, die allerdings systembedingt nicht in ein Längenmaß umgerechnet werden kann. Die Intensität ist ein Maß für die Konzentration des betreffenden Elementes.

Dieses Ergebnis ergänzt den Befund aus der TEM-Aufnahme, es wird nämlich bestätigt, dass die Oberfläche der polymeren Unterlagen durch SiO₂ bedeckt ist. Der im linken Teil des Diagrammes dargestellte Kohlenstoffanteil rührt von der hydrophobierten Oberfläche der SiO₂-Partikel her (bis zu einer Ionenabrasionszeit von etwa 35 Sekunden ) und geht nach dieser Zeit in das deutlich höhere C-Niveau des organischen Trägerpolymers über, während gleichzeitig das Silicium-Signal abnimmt, da das Trägerpolymer kein Silicium in nennenswerten Mengen enthält.

## Patentansprüche

1. Verfahren zur Herstellung eines Formkörpers, der eine Unterlage aus einem polymeren Material und auf der Unterlage vorliegende, und mit dieser fest verbundene Partikel, die eine superhydrophobe, Erhebungen und Vertiefungen aufweisende Schicht bilden, umfasst, bei dem man die auf das polymere Material aufgebrachten hydrophoben, nanoskaligen Partikel und das Trägermaterial über einen Zeitraum von 0,1 Sekunden bis 5 Stunden mit Beta- und/oder Gammastrahlung beaufschlagt, derart, dass eine Strahlungsdosis von 10 bis 1000 kGy aufgenommen wird.

2. Verfahren nach Anspruch 1, **dadurch gekennzeichnet, dass** man das polymere Material wählt aus der Gruppe bestehend aus Thermoplasten, Duroplasten und Elastomeren.

3. Verfahren nach Anspruch 2, **dadurch gekennzeichnet, dass** als polymeres Material wenigstens eines ausgewählt aus der Gruppe bestehend aus Polycarbonaten, Polyoxymethylenen, Poly(meth)acrylaten, Polyamiden, Polyvinylchlorid, Polyethylenen, Polypropylenen, aliphatischen linearen- oder verzweigten Polyalkenen, cyclischen Polyalkenen, Polystyrolen, Polyestern, Polyethersulfonen, Polyacrylnitril oder Polyalkylenterephthalaten, Poly(vinylidenfluorid), Poly(hexafluorpropylen), Poly(perfluorpropylenoxid), Poly(fluoralkylacrylat), Poly(fluoralkylmethacrylat), Poly(vinylperfluoralkylether) oder andere Polymere aus Perfluoralkoxyverbindungen, Poly(isobuten), Poly(4-methyl-1- penten) und Polynorbornen als Homo- oder Copolymer eingesetzt werden.

4. Verfahren nach den Ansprüchen 1 bis 3, **dadurch gekennzeichnet, dass** man als Partikel hydrophobe, nanoskalige Metalloxidpartikel einsetzt.

5. Verfahren nach Anspruch 4, **dadurch gekennzeichnet, dass** man als Metalloxidpartikel pyrogen hergestellte, hydrophobierte Metalloxidpartikel mit einer BET-Oberfläche von 20 bis 400 m²/g einsetzt.

6. Verfahren nach den Ansprüchen 1 bis 5, **dadurch gekennzeichnet, dass** man die Partikel in Form einer Dispersion auf das polymere Material aufbringt und das Lösungsmittel anschließend entfernt.

7. Verfahren nach den Ansprüchen 1 bis 6, **dadurch gekennzeichnet, dass** man die Partikel in eine Spritzgußform einbringt und anschließend einen Spritzguss durchführt, bei dem die Partikel in die Oberfläche des polymeren Materiales eingedrückt werden.

8. Verfahren nach den Ansprüchen 1 bis 7, **dadurch gekennzeichnet, dass** man die Partikel mittels einer Kalandriervorrichtung auf ein polymeres Material aufbringt, so dass die Partikel in die Oberfläche des polymeren Materiales eingedrückt werden.

9. Formkörper erhältlich nach dem Verfahren gemäß der Ansprüche 1 bis 8.

10. Formkörper nach Anspruch 9, **dadurch gekennzeichnet, dass** die Schichtdicke der superhydrophoben Oberfläche 0,05 bis 100 µm beträgt.

11. Formkörper nach den Ansprüchen 9 oder 10, **dadurch gekennzeichnet, dass** die Erhebungen eine mittlere Höhe von 20 nm bis 25 µm aufweisen.

12. Formkörper nach den Ansprüchen 9 bis 11, **dadurch gekennzeichnet, dass** die Erhebungen einen mittleren Abstand von 20 nm bis 25 µm aufweisen.

## Claims

1. Process for producing a molding which comprises a substrate of a polymeric material and particles which are present on the substrate, are bonded to it in a fixed manner and form a superhydrophobic layer having elevations and depressions, in which the hydrophobic nanoscale particles applied to the polymeric material and the support material are subjected to beta and/or gamma radiation over a period of 0.1 second to 5 hours such that a radiation dose of 10 to 1000 kGy is absorbed.

2. Process according to Claim 1, **characterized in that** the polymeric material is selected from the group consisting of thermoplastics, thermosets and elastomers.

3. Process according to Claim 2, **characterized in that** the polymeric material used is at least one selected from the group consisting of polycarbonates, polyoxymethylenes, poly(meth)-acrylates, polyamides, polyvinyl chloride, polyethylenes, polypropylenes, aliphatic linear or branched polyalkenes, cyclic polyalkenes, polystyrenes, polyesters, polyether sulfones, polyacrylonitrile or polyalkylene terephthalates, poly(vinylidene fluoride), poly(hexafluoropropylene), poly(perfluoropropylene oxide), poly-(fluoroalkyl acrylate), poly(fluoroalkyl methacrylate), poly(vinyl perfluoroalkyl ether) or other polymers formed from perfluoroalkoxy compounds, poly(isobutene), poly(4-methyl-1-pentene) and polynorbornene as a homo- or copolymer.

4. Process according to Claims 1 to 3, **characterized in that** the particles used are hydrophobic nanoscale metal oxide particles.

5. Process according to Claim 4, **characterized in that** the metal oxide particles used are pyrogenic hydrophobized metal oxide particles having a BET surface area of 20 to 400 m²/g.

6. Process according to Claims 1 to 5, **characterized in that** the particles are applied to the polymeric material in the form of a dispersion and the solvent is then removed.

7. Process according to Claims 1 to 6, **characterized in that** the particles are introduced into an injection mold and then an injection molding operation is performed, in which the particles are impressed into the surface of the polymeric material.

8. Process according to Claims 1 to 7, **characterized in that** the particles are applied to a polymeric material by means of a calendering apparatus such that the particles are impressed into the surface of the polymeric material.

9. Molding obtainable by the process according to Claims 1 to 8.

10. Molding according to Claim 9, **characterized in that** the layer thickness of the superhydrophobic surface is 0.05 to 100 µm.

11. Molding according to Claim 9 or 10, **characterized in that** the elevations have a mean height of 20 nm to 25 µm.

12. Molding according to Claims 9 to 11, **characterized in that** the elevations have a mean separation of 20 nm to 25 µm.

## Revendications

1. Procédé de fabrication d'un corps moulé qui comprend une sous-couche en un matériau polymère et des particules, se trouvant sur la sous-couche et reliées solidement avec celle-ci, qui forment une couche superhydrophobe présentant des protubérances et des creux, selon lequel les particules nanométriques hydrophobes appliquées sur le matériau polymère et le matériau support sont exposés à un rayonnement bêta et/ou gamma pendant une durée de 0,1 seconde à 5 heures, de manière à absorber une dose de rayonnement de 10 à 1 000 kGy.

2. Procédé selon la revendication 1, **caractérisé en ce que** le matériau polymère est choisi dans le groupe constitué des thermoplastiques, des duroplastiques et des élastomères.

3. Procédé selon la revendication 2, **caractérisé en ce qu'**au moins un matériau choisi dans le groupe constitué des polycarbonates, des polyoxyméthylènes, des poly(méth)acrylates, des polyamides, du polychlorure de vinyle, des polyéthylènes, des polypropylènes, des polyalcènes aliphatiques linéaires ou ramifiés, des polyalcènes cycliques, des polystyrènes, des polyesters, des polyéthersulfones, du polyacrylonitrile ou des polyalkylène téréphtalates, du polyfluorure de vinylidène, du polyhexafluoropropylène, du polyoxyde de perfluoropropylène, du polyacrylate de fluoroalkyle, du polyméthacrylate de fluoroalkyle, du polyéther perfluoroalkylique de vinyle ou d'autres polymères à base de composés de perfluoroalcoxy, de polyisobutène, de poly(4-méthyl-1-pentène) et de polynorbornène sous la forme d'un homo- ou copolymère est utilisé en tant que matériau polymère.

4. Procédé selon les revendications 1 à 3, **caractérisé en ce que** des particules d'oxyde métallique nanométriques et hydrophobes sont utilisées en tant que particules.

5. Procédé selon la revendication 4, **caractérisé en ce que** des particules d'oxyde métallique hydrophobées, fabriquées par voie pyrogène, ayant une surface BET de 20 à 400 m²/g sont utilisées en tant que particules d'oxyde métallique.

6. Procédé selon les revendications 1 à 5, **caractérisé en ce que** les particules sont appliquées sur le matériau polymère sous la forme d'une dispersion et le solvant est ensuite éliminé.

7. Procédé selon les revendications 1 à 6, **caractérisé en ce que** les particules sont introduites dans un moule de moulage par injection, puis un moulage par injection est réalisé, lors duquel les particules sont enfoncées dans la surface du matériau polymère.

8. Procédé selon les revendications 1 à 7, **caractérisé en ce que** les particules sont appliquées sur un matériau polymère au moyen d'un dispositif de calandrage, de manière à ce que les particules soient enfoncées dans la surface du matériau polymère.

9. Corps moulé pouvant être obtenu par le procédé selon les revendications 1 à 8.

10. Corps moulé selon la revendication 9, **caractérisé en ce que** l'épaisseur de couche de la surface superhydrophobe est de 0,05 à 100 µm.

11. Corps moulé selon les revendications 9 ou 10, **caractérisé en ce que** les protubérances présentent une hauteur moyenne de 20 nm à 25 µm.

12. Corps moulé selon les revendications 9 à 11, **caractérisé en ce que** les protubérances présentent un espacement moyen de 20 nm à 25 µm.
